Europäisches Patentamt

European Patent Office

Office européen des brevets

(19)

(11) Publication number: **0 048 120**
**B1**

(12) # EUROPEAN PATENT SPECIFICATION

(45) Date of publication of patent specification: **01.02.84**

(51) Int. Cl.³: **C 03 C 3/10, H 01 K 1/28**

(21) Application number: **81304071.4**

(22) Date of filing: **07.09.81**

(54) **Glass envelopes for tungsten-halogen lamps and production thereof.**

(30) Priority: **08.09.80 US 184764**

(43) Date of publication of application:
**24.03.82 Bulletin 82/12**

(45) Publication of the grant of the patent:
**01.02.84 Bulletin 84/5**

(84) Designated Contracting States:
**BE DE FR GB NL**

(56) References cited:
**None**

(73) Proprietor: **Corning Glass Works**
**Houghton Park**
**Corning, New York, 14831 (US)**

(72) Inventor: **Danielson, Paul Stephen**
**269 Wall Street Corning**
**New York 14830 (US)**

(74) Representative: **Smith, Sydney et al,**
**Elkington and Fife High Holborn House 52/54**
**High Holborn**
**London WC1V 6SH (GB)**

Courier Press, Leamington Spa, England.

# 0 048 120

### Glass envelopes for tungsten-halogen lamps and production thereof

This invention relates to glass for use as envelopes for tungsten-halogen lamps and to the production thereof.

Tungsten-halogen lamps possess several practical advantages when compared with conventional incandescent lamps. Firstly, such lamps may be of small size, e.g. less than 1% of the volume of a conventional lamp, yet produce an equivalent and even greater amount of lumination. Secondly, the light emitted is whiter than that produced by a conventional lamp. Thirdly, the intensity of the illumination emitted remains substantially constant throughout the lift of the lamp. Fourthly, a tungsten-halogen lamp has a much longer working life than a conventional incandescent lamp.

However, such lamps operate at temperatures in excess of 500°C, generally at from 500 to 700°C. Consequently, envelopes for such lamps must resist thermal deformation when exposed to those temperatures. Initially, transparent envelopes for such lamps were fabricated from fused quartz and 96% silica compositions sold under the trademark "VYCOR" since those materials evidenced essentially no thermal deformation during lamp operation. Unfortunately, the processes for producing fused quartz and 96% silica glasses are expensive and do not lend themselves to conventional mass production techniques. Furthermore, such products are difficult to form and lampwork and, because of the very low coefficients of thermal expansion thereof, require the use of specialised sealing techniques to introduce the lead wires into the lamps. Accordingly, research has been continuous and extensive to develop a glass demonstrating melting and forming capabilities suitable for mass producing lamp envelopes and displaying the physical properties necessary for that application. The bulk of this composition research has been undertaken with glasses in the alkaline earth aluminosilicate system. For example:

United States Patent No. 3,496,401 discloses glasses specifically designed for use as glass envelopes in tungsten-iodine incandescent lamps. These glasses consist essentially expressed in weight percent on the oxide basis, of from 10 to 25% alkaline earth metal oxide, from 13 to 25% $Al_2O_3$, from 55 to 70% $SiO_2$, from 0 to 10% $B_2O_3$ and less than 0.1% alkali metal oxide.

United States Patent No. 3,978,362 is concerned with glasses which are especially suitable as envelopes in tungsten-bromine incandescent lamps. These glasses exhibit strain points above 700°C, a coefficient of thermal expansion (0—300°C) of from 48 to $55 \times 10^{-7}/C°$, a mismatch with molybdenum metal at the set point of the glass not exceeding 250 PPM (parts per million), an operable melting temperature no higher than 1550°C, a viscosity at the liquidus of at least 100,000 poises (10000 Pa.s) and a liquidus temperature below 1200°C. The compositions therefor consist essentially, expressed in weight percent on the oxide basis, of from 14 to 21% CaO, from 0 to 5% MgO, from 0 to 7% BaO, CaO + MgO + BaO being at least 19%, from 13 to 16% $Al_2O_3$, from 0 to 10% SrO and/or $La_2O_3$ and from 58 to 63% $SiO_2$.

United States Patent No. 4,060,423 describes another group of glass compositions statedly demonstrating properties rendering them useful as envelopes for tungsten-halogen lamps. These glasses manifest a strain point of at least 725°C, a liquidus temperature no higher than 1250°C and a coefficient of thermal expansion (0—300°C) of from 42 to $48 \times 10^{-7}/C°$ and are prepared from compositions consisting essentially, expressed in weight percent on the oxide basis, of from 55 to 68% $SiO_2$, from 15 to 18% $Al_2O_3$, from 6 to 13% CaO and from 6 to 16% BaO, the weight ratio $Al_2O_3$:CaO + BaO being from 0.6:1 to 1:1.

Also, United States Patent No 4,255,198 delineates yet another narrow range of glass compositions especially designed for use as tungsten-halogen lamp envelopes. These glasses display a strain point higher than 730°C, a liquidus temperature below 1200°C, a viscosity at the liquidus of at least 40,000 poises (4000 Pa.s), a coefficient of thermal expansion (0—300°C) of less than $48 \times 10^{-7}/C°$, but greater than $43 \times 10^{-7}/C°$ and an axial compression at room temperature not exceeding 150 PPM at 500°C when sealed to molybdenum metal. As expressed in weight percent on the oxide basis, these glasses consist essentially of from 61 to 65% $SiO_2$, from 14 to 17% $Al_2O_3$, from 8 to 15% CaO and from 6 to 9% SrO.

Glasses encompassed within each of the above disclosures have been manufactured for use as tungsten-halogen lamp envelopes. However, none has been deemed an optimum for that application either in terms of manufacturing capability and/or physical properties.

Thus, there are three critical physico-chemical properties associated with glass manufacturability and lamp performance which must be optimised in a glass comprising the envelope of a tungsten-halogen lamp. These are: (1) the liquidus temperature or the maximum temperature of devitrification; (2) the strain point, i.e. the temperatures at which a glass exhibits a viscosity of $10^{14.6}$ poises; and (3) the coefficient of thermal expansion.

The maximum temperature of devitrification is of vital concern during the melting and forming of a glass article. In general terms, molten glass is delivered from a melting unit and normally formed into a desired shape at a temperature above that at which the glass composition will devitrify at an appreciable rate. Envelopes for tungsten-halogen lamps are formed from glass tubing. In the manufacture of glass tubing, it has been deemed more appropriate to specify a minimum viscosity at the liquids temperature, rather than an arbitrary maximum temperature of devitrification, since temperature-viscosity relationships vary significantly from one glass composition to the next. A useful guide line for defining a suitable composition for preparing glass tubing holds that the maximum temperature of devitrification should occur at or below a temperature corresponding to a glass viscosity of 30,000 poises (3000 Pa.s). While in theory there is no temperature limit if the glass viscosity is sufficiently high, there is a practical constraint imposed by the thermal endurance of the melting and forming equipment. It has now been found that glasses suitable for forming tubing utilising a conventional "Vello" process should have liquidus temperatures below 1300°C.

The strain point provides an indication of the thermal endurance exhibited by a glass, as well as the temperature near which stresses begin to develop in glass-to-metal seals. The light output of tungsten-halogen lamps increases as the temperature of operation thereof is raised. Accordingly, producers of such lamps have continually sought to operate the lamps at even higher temperatures and it has now been found that, to satisfy that trend, envelope glasses should exhibit strain points in excess of 750°C.

The combination of strain point and the coefficient of thermal expansion of the glass is a critical factor in determining the amount and type of stress developed when a glass-to-metal seal is cooled from the sealing temperature (and subsequently reheated during lamp operation). In the case of tungsten-halogen lamps, the metal leads are fashioned from molybdenum which has a relatively constant coefficient of thermal expansion of about $55 \times 10^{-7}/C°$.

Previous glass research developed glasses closely matching the expansion coefficient of molybdenum. For example, United States Patent No. 3,978,362, *supra*, discloses glasses exhibiting coefficients of thermal expansion (0—300°C) of from 48 to $55 \times 10^{-7}/C°$. Mismatch to molybdenum metal was estimated by comparing expansion curves of each from the set point of the glass to room temperature.

More recent developments in the study of glass-to-metal seal stresses have utilised photoelastic analysis of actual seals between molybdenum wire and glass. For example, S. M. Rekhson, *Glass Technology, 20,* No. 1, 1979, gives a general overview of the method and United States Patent No. 4,255,198, *supra*, deals explicitly with cylindrical seals to molybdenum metal wire. Such discussions have improved the understanding of residual stresses which are generated upon cooling a glass-to-metal seal of simple geometry from the set point to room temperature. Thus, different heat treatments may be considered and good estimates of room temperature stress may be made as a function of the thermal expansivity of the glass. By utilising that procedure, United States Patent No. 4,255,198, *supra*, concluded that glasses having coefficients of thermal expansion within the range of $>43 \times 10^{-7}/C°$ but $<48 \times 10^{-7}/C°$ were suitable for tungsten-halogen lamp envelopes.

However, still more recent evaluations of actual tungsten-halogen lamps, after life testing, have modified the previous understanding of residual stresses developed upon cooling glass-to-metal seals of simple geometry. Specifically, examinations of lamps operated at full power for extended periods to simulate actual use conditions have found that additional stresses develop in the glass-to-metal seal area due to non-uniform heating of the glass, the complex geometry of the seal and, perhaps, some high temperature relaxation. Consequently, glasses which demonstrate desirably low sealing stresses in cylindrical bead seals may still exhibit inferior performance when employed as envelopes in tungsten-halogen lamps. It has now been found through such analyses of residual stresses in tested lamps that a coefficient of thermal expansion (0—300°C) of about $43 \times 10^{-7}/C°$ is the optimum value. Accordingly, the coefficient of thermal expansion of the glass will be from 42 to $44 \times 10^{-7}/C°$.

It has now been discovered that the above-defined values for the three critical physico-chemical properties, in conjunction with other characteristics conventionally required in envelope glasses for tungsten-halogen lamps, such as good chemical durability, transparency and freedom from colour, may be satisfied within an extremely narrow range of compositions within the alkaline earth metal aluminosilicate system. Hence, it has now been found that the desired requirements for coefficient of thermal expansion, strain point and liquidus may be simultaneously achieved only in compositions wherein a carefully delineated combination of CaO and SrO and/or BaO is present with $Al_2O_3$ and $SiO_2$. Accordingly, the present compositions consist essentially, expressed in terms of weight percent on the oxide basis, of from 64 to 68% $SiO_2$, from 11 to 14% CaO, from 16.5 to 18.5% $Al_2O_3$ and from 2 to 6.5% SrO + BaO consisting of from 0 to 4% SrO and from 0 to 5% BaO.

The present invention provides a glass characterised in that it exhibits a strain point of higher than 750°C, a coefficient of thermal expansion (0—300°C) of from 42 to $44 \times 10^{-7}/C°$, a liquidus temperature of below 1300°C, a viscosity at the liquidus of at least 40,000 poises (4000 Pa.s) and consists essentially, expressed in terms of weight on the oxide basis, of from 64 to 68% $SiO_2$, from 11 to 14% CaO, from 16.5 to 18.5% $Al_2O_3$ and from 2 to 6.5% SrO + BaO, consisting of from 0 to 4% SrO and from 0 to 5% BaO.

Experience has indicated that, where CaO or a combination of CaO + MgO constitutes the sole alkaline earth metal oxide content, the liquidus temperatures are generally too high. Excess amounts of SrO commonly result in liquidus temperatures and coefficients of thermal expansion which are too high. Greater levels of BaO normally lead to glasses demonstrating strain points which are too low, coefficients of thermal expansion which are too high, or which suffer from undesirable viscosity- temperature effects at high temperatures. The preferred glasses contain a combination of SrO + BaO, the total of which will be at least 3%, by weight, and they will be present in a molar ratio SrO:BaO of from 2:1 to 1:2. This combination appears to exert a mixed alkaline earth metal effect which improves the high temperature viscosity relationship of the glasses. For example, such glasses may exhibit a 1000 poise (100 Pa.s) viscosity at temperatures no higher than 1520°C. In contrast, glasses containing only SrO or BaO require temperatures approaching 1550°C and even higher to achieve a similar viscosity. This feature is highly desirable in melting and forming operations. Accordingly, in a preferred embodiment, the present invention provides such a glass which exhibits a viscosity of less than 1000 poises at temperatures no higher than 1520°C and comprises at least 3% SrO + BaO, the molar ratio SrO:BaO being from 2:1 to 1:2.

The present invention also provides a process for the production of such a glass which comprises compounding and melting appropriate components.

The present invention further provides a tungsten-halogen lamp which comprises an envelope comprising such a glass.

Table 1 below records several glass compositions, expressed in terms of parts, by weight, on the oxide basis as calculated from the batch, which illustrates the parameters of the present invention. Inasmuch as the sum of the constituents totals or approximately totals 100, for all practical purposes the individual components may be considered to be reported in terms of weight percent. Table 1A lists the constituents in approximate mole percent as calculated from the batches. The actual batch ingredients may comprise various materials, either the oxides or other compounds, which, when melted together, will be converted into the desired oxides in the proper proportions. To illustrate $CaCO_3$ may provide the source of CaO and $SrCO_3$ the source SrO.

The batch materials were compounded, ball-milled together to assist in securing a homogeneous melt and then placed into platinum crucibles. The crucibles were introduced into a furnace operating at 1650°C and the batches melted for about 16 hours. The crucibles were thereafter removed from the furnace, the melts poured into steel moulds to produce glass slabs having dimensions about 15 cms × 15 cms × 1.3 cms (6″ × 6″ × ½″), and the slabs immediately transferred to an annealer operating at about 810°C. (Although the exemplary compositions reported below were in the form of laboratory melts only, it will be appreciated that larger commercial melts thereof may be undertaken in pots or continuous melting units.)

## TABLE 1

|  | 1 | 2 | 3 | 4 | 5 | 6 | 7 |
|---|---|---|---|---|---|---|---|
| $SiO_2$ | 65.80 | 65.30 | 65.30 | 67.30 | 67.50 | 64.80 | 66.30 |
| $Al_2O_3$ | 17.30 | 17.20 | 17.20 | 17.70 | 17.20 | 17.00 | 17.40 |
| CaO | 12.95 | 12.90 | 12.00 | 15.00 | 12.10 | 11.90 | 13.10 |
| SrO | 1.60 | — | 3.20 | — | 3.20 | 1.60 | 3.20 |
| BaO | 2.35 | 4.70 | 2.40 | — | — | 4.70 | — |

## TABLE 1A

|  | 1 | 2 | 3 | 4 | 5 | 6 | 7 |
|---|---|---|---|---|---|---|---|
| $SiO_2$ | 71.7 | 71.7 | 71.7 | 71.7 | 7.30 | 71.7 | 71.7 |
| $Al_2O_3$ | 11.1 | 11.1 | 11.1 | 11.1 | 11.1 | 11.1 | 11.1 |
| CaO | 15.2 | 15.2 | 14.1 | 17.2 | 14.0 | 14.1 | 15.2 |
| SrO | 1.0 | — | 2.0 | — | 2.0 | 1.0 | 2.0 |
| BaO | 1.0 | 2.0 | 1.0 | — | — | 2.0 | — |

4

Table 2 below records measurements of several physical properties determined on the above-recited glasses, the measurements being conducted in accordance with techniques conventional in the glass art. The annealing point (Ann. Pt.), strain point (Str. Pt.), internal liquidus (Liq.) and temperature at 1000 poises ($10^3$ poises) (100 Pa.s) are tabulated in °C and the viscosity at the liquidus (Liq. Visc.) in poises. The coefficient of thermal expansion (Coef Exp.) was determined over the range 0—300°C and is reported in terms of $\times 10^{-7}/C°$.

TABLE 2

|  | 1 | 2 | 3 | 4 | 5 | 6 | 7 |
|---|---|---|---|---|---|---|---|
| Ann. Pt. | 807 | 807 | 806 | 816 | 815 | 805 | 812 |
| Str. Pt. | 757 | 756 | 755 | 765 | 764 | 755 | 762 |
| Coef. Exp. | 43.2 | 43.5 | 43.4 | 41.6 | 41.2 | 43.4 | 42.7 |
| Liq. | 1278 | 1266 | 1280 | 1300 | 1295 | 1268 | 1275 |
| Liq. Visc. | 40,000 (4000 Pa.s) | 45,000 (4500 Pa.s) |  | 30,000 (3000 Pa.s) |  |  |  |
| $10^3$ poises | 1506 | 1555 |  |  |  |  |  |

Example 4 illustrates the high liquidus temperature resulting when SrO and BaO are absent from the glass composition. A comparison of Examples 1 and 2 demonstrates the beneficial, mixed alkaline earth metal effect upon high temperature viscosity which the combination of SrO + BaO imparts to the glass. The most preferred embodiment of the present compositions is Example 1. Hence, a particularly preferred glass provided by the present invention comprises approximately, expressed in terms of weight percent on the oxide basis:

| | |
|---|---|
| $SiO_2$ | 65.80 |
| $Al_2O_3$ | 17.30 |
| CaO | n12.95 |
| SrO | 1.60 |
| BaO | 2.35. |

## Claims

1. A glass characterised in that it exhibits a strain point of higher than 750°C, a coefficient of thermal expansion (0—300°C) of from 42 to 44 $\times 10^{-7}/C°$, a liquidus temperature of below 1300°C, a viscosity at the liquidus of at least 40,000 poises (4000 Pa.s) and consists essentially, expressed in terms of weight on the oxide basis, of from 64 to 68% $SiO_2$, from 11 to 14% CaO, from 16.5 to 18.5% $Al_2O_3$ and from 2 to 6.5% SrO + BaO, consisting of from 0 to 4% SrO and from 0 to 5% BaO.

2. A glass according to claim 1 characterised in that it exhibits a viscosity of less than 1000 poises (100 Pa.s) at temperatures no higher than 1520°C and comprises at least 3% SrO + BaO, the molar ratio SrO:BaO being from 2:1 to 1:2.

3. A glass according to claim 1 or claim 2 characterised in that it comprises approximately, expressed in terms of weight percent on the oxide basis:

| | |
|---|---|
| $SiO_2$ | 65.80 |
| $Al_2O_3$ | 17.30 |
| CaO | 12.95 |
| SrO | 1.60 |
| BaO | 2.35 |

**0 048 120**

4. A process for the production of a glass according to claim 1 characterised in that it comprises compounding and melting appropriate components.

5. A tungsten-halogen lamp characterised in that it comprises an envelope comprising a glass according to any of claims 1 to 3.

**Patentansprüche**

1. Glas, dadurch gekennzeichnet, daß es eine untere Kühltemperatur von höher als 750°C, einen Wärmeausdehnungskoeffizienten (0—300°C) von 42 bis 44 × $10^{-7}$/°C, eine Liquidustemperatur von unter 1300°C, eine Viskosität beim Liquidus von wenigstens 40000 Poise (4000 Pa.s) aufweist und im wesentlichen — in Gew.% auf Oxidbasis — aus 64 bis 68% $SiO_2$, 11 bis 14% CaO, 16,5 bis 18,5% $Al_2O_3$ und 2 bis 6,5% SrO + BaO, wobei 0 bis 4% SrO und 0 bis 5% BaO enthalten sind, besteht.

2. Glas nach Anspruch 1, dadurch gekennzeichnet, daß es eine Viskosität von weniger als 1000 Poise (100 Pa.s) bei Temperaturen von nicht höher als 1520°C aufweist und wenigstens 3% SrO + BaO enthält, wobei das molare Verhältnis SrO:BaO zwischen 2:1 und 1:2 liegt.

3. Glas nach einem der Ansprüche 1 oder 2, dadurch gekennzeichnet, daß es — in Gew.% auf Oxidbasis — annähernd

| | |
|---|---|
| $SiO_2$ | 65,80 |
| $Al_2O_3$ | 17,30 |
| CaO | 12,95 |
| SrO | 1,60 |
| BaO | 2,35 |

enthält.

4. Verfahren zur Herstellung eines Glases nach Anspruch 1, dadurch gekennzeichnet, daß ein geeigneter Ansatz zusammengestellt und dann geschmolzen wird.

5. Wolfram-Halogen-Lampe, dadurch gekennzeichnet, daß sie einen Glaskolben aus dem Glas gemäß einem der Ansprüche 1 bis 3 aufweist.

**Revendications**

1. Verre caractérisé en ce qu'il présente un point de tension supérieur à 750°C, un coefficient de dilatation thermique (0—300°C) de 42 à 44 × $10^{-7}$/°C, une température de liquidus inférieure à 1300°C, une viscosité au liquidus d'au moins 40000 poises (4000 Pa.s) et est essentiellement formé, en proportions pondérales rapportées aux oxydes, de 64 à 68% de $SiO_2$, de 11 à 14% de CaO, 16,5 à 18,5% d'$Al_2O_3$ et de 2 à 6,5% de SrO + BaO, avec 0 à 4% de SrO et 0 à 5% de BaO.

2. Verre selon la revendication 1, caractérisé en ce qu'il représente une viscosité inférieure à 1000 poises (100 Pa.s) à des températures non supérieures à 1520°C et comprend au moins 3% de SrO + BaO, le rapport molaire SrO:BaO étant de 2:1 à 1:2.

3. Verre selon la revendication 1 ou la revendication 2, caractérisé en ce qu'il comprend approximativement, en proportions pondérales centésimales rapportées aux oxydes:

| | |
|---|---|
| $SiO_2$ | 65,80 |
| $Al_2O_3$ | 17,30 |
| CaO | 12,95 |
| SrO | 1,60 |
| BaO | 2,35 |

4. Procédé pour la préparation d'un verre selon la revendication 1, caractérisé en ce qu'il comprend la combinaison et la fusion de constituants appropriés.

5. Lampe tungstène-halogène(s) caractérisé en ce qu'elle comprend une enveloppe comprenant un verre selon l'une quelconque des revendications 1 à 3.

6